# EUROPEAN PATENT SPECIFICATION

(11) **EP 3 993 248 B1**
(45) Date of publication and mention of the grant of the patent: **20.09.2023**
(21) Application number: 21205577.6
(22) Date of filing: 29.10.2021
(51) Int. Cl.: H02M 5/458, H02M 7/49, H02M 1/12, H02P 25/22

(54) **THREE PHASE AC-THREE PHASE AC CONVERTER**
DREHSTROM-DREHSTROM STROMRICHTER
CONVERTISSEUR CA TRIPHASÉ-CA TRIPHASÉ

(30) Priority: 29.10.2020 JP 2020181218
(43) Date of publication of application: 04.05.2022
(73) Proprietor: Nabtesco Corporation, Tokyo 102-0093 (JP)
(72) Inventor: Ono, Yasuo, Tokyo (JP)
(74) Representative: Grünecker Patent- und Rechtsanwälte PartG mbB

(56) References cited:
- EP-A1- 3 048 718
- JP-A- 2012 044 830
- US-A1- 2008 055 947
- JUN WEN ET AL: "A New Multilevel Inverter - Hexagram Inverter for Medium Voltage Adjustable Speed Drive Systems Part II. Three-phase Motor Drive", POWER ELECTRONICS SPECIALISTS CONFERENCE, 2007. PESC 2007. IEEE, IEEE, PISCATAWAY, NJ, USA, 17 June 2007 (2007-06-17), pages 1571-1577, XP031218516, ISBN: 978-1-4244-0654-8
- JIA ZOU ET AL: "Triple line-voltage cascaded VIENNA converter applied as the medium-voltage rectifier", IECON 2017 - 43RD ANNUAL CONFERENCE OF THE IEEE INDUSTRIAL ELECTRONICS SOCIETY, IEEE, 29 October 2017 (2017-10-29), pages 1635-1641, XP033279778, DOI: 10.1109/IECON.2017.8216277 [retrieved on 2017-12-15]
- NISHIO MOTOKI ET AL: "Single-Phase to Three-Phase Electrolytic Capacitor-Less Dual Inverter-Fed IPMSM for Suppress Torque Pulsation", IEEE TRANSACTIONS ON INDUSTRIAL ELECTRONICS, IEEE SERVICE CENTER, PISCATAWAY, NJ, USA, vol. 68, no. 8, 10 June 2020 (2020-06-10), pages 6537-6546, XP011852609, ISSN: 0278-0046, DOI: 10.1109/TIE.2020.3000091 [retrieved on 2021-04-30]

## Description

The present invention relates to a three phase AC-three phase AC converter.

Three-phase motors are widely used in industrial equipment such as fans, pumps, and FA equipment. A motor drive system for driving such a three-phase motor generally includes a three phase AC-three phase AC converter consisting of a rectifier circuit that rectifies a three-phase AC voltage so as to generate a DC voltage (rectified voltage), a subsequent DC link, and an inverter circuit that generates a three-phase AC voltage from a DC link voltage.

[Non-patent Literature 1] M. Guacci, D. Bortis, and J.W. Kolar, "High-Efficiency Weight-Optimized Fault-Tolerant Modular Multi-Cell Three-Phase GaN Inverter for Next Generation Aerospace Applications," in Proc. of IEEE Energy Conversion Congress and Application (ECCE-USA), Portland, OR, USA, Sept. 2018, pp.1334-1341.

[Non-patent Literature 2] J.W. Kolar and T. Friedli "The Essence of Three-Phase PFC Vector Systems-Part I," IEEE Transitions on Power Electronics, vol. 28, no. 1, 1, pp.176-198, 2013.

[Non-patent Literature 3] J. Wen and K. Smedley, "A New Multilevel Inverter-Hexagram Inverter for Medium Voltage Adjustable Speed Drive Systems Part II. Three-phase motor Drive," in Proc. of the IEEE Power Electronics Specialists Conference (PESC), Orlando, FL, USA, June 2007, pp.1571-1757.

[Non-patent Literature 4] J. Wen and K.M. Smedley, "Synthesis of Multilevel Converters Based on Single-and/or Three-Phase Converter Building Blocks," IEEE Transactions on Power Electronics, vol. 23, no. 3, pp. 1247-1256, May 2008.

US 2008/055947 A1 relates to a multilevel inverter including a hexagonal converter back-to-back system converting a three-phase input voltage to a three-phase output voltage via conversion to DC voltages. Input terminals of rectifier circuits are connected to input terminals of the other rectifier circuits via inductors.

Jia Zou et al: "Triple line-voltage cascaded VIENNA converter applied as the medium-voltage rectifier", IECON 2017 - 43rd annual conference of the IEEE industrial electronics society, IEEE, October 29, 2017, pages 1635-1641, relates to a three-phase rectifier, wherein a power converter includes three rectifier circuits connected to respective outputs of a three-phase power source and to each other via indictors.

Furthermore, JP2012044830 proposes a power factor control scheme for an inverter-fed motor, according to which a target value for the inverter output power is determined from the output of a speed controller and a calculated capacitor power. Bandpass filtering is applied to a motor current error signal in order to detect ripple components and compensate for delays and synchronise the inverter output power with the line voltage.

In a motor drive system, it is required that the entire motor drive system can be miniaturized and made denser for the purpose of allowing for the use of low voltage resistant elements, the reduction in design man-hours, and the commonization of components. As one of the technologies that realize this, the motor is configured to include a modular motor that is independent for each segment of a three-phase winding, and in order to drive each segment for each modular, "modular motor drive (MMD) system" has been proposed in which an inverter circuit is modularized (see, for example, Non-patent Literature 1). However, in this type of MMD, although the inverter circuit is modularized, the rectifier circuit is not modularized. In this case, since a high voltage resistant semiconductor element is required for the rectifier circuit, miniaturization and densification of the entire motor drive system are difficult.

A six-switch boost rectifier circuit has been proposed as a method for modularizing a rectifier circuit having a three phase bridge configuration (see, for example, Non-patent Literature 2). In this circuit, an inductor for filtering is used as an inductor for boosting. In this case, in order to realize boost operation, the output voltage of the rectifier circuit (that is, the total DC link voltage of the inverter circuit) must be set to be larger than the line peak voltage of input voltage. Therefore, the rectifier circuit must be operated at a high voltage, and a high voltage resistant element is required. As a result, the miniaturization and densification of the entire motor drive system become difficult, and a dedicated design according to the input voltage is required, which increases the design and manufacturing costs.

As another method for modularizing a rectifier circuit, there is a back to back hexagram converter that uses the same low-voltage element circuit for the rectifier circuit and the inverter circuit (see, for example, Non-patent Literature 3). However, this configuration requires isolated open delta connection, which is disadvantageous in terms of miniaturization, densification, and cost.

Yet another method for modularizing the rectifier circuit is to use several interconnected three-phase AC-DC rectifier cells (see, for example, Non-patent Literature 4). Since this interconnection can lower the voltage resistance of the rectifier cell, the same cell can be used for the rectifier cell and the inverter. However, an additional isolated DC-DC converter is required to drive a single load using inverter cells connected in parallel to the input. This additional DC-DC converter is a cause that hinders the miniaturization and densification of the entire motor drive system.

As described above, conventional rectifier circuits have a problem that the miniaturization and densification of a motor drive system cannot be sufficiently achieved. In this background, a purpose of the present invention is to achieve the miniaturization and densification of a motor drive system.

This is achieved by the features of the independent claim. The dependent claims describe advantageous embodiments.

Embodiments will now be described by way of examples only, with reference to the accompanying drawings which are meant to be exemplary, not limiting and wherein like elements are numbered alike in several Figures in which:
FIG. 1 is a functional block diagram of a three phase AC-three phase AC converter according to a first embodiment;
FIG. 2 is a functional block diagram of a three phase AC-three phase AC converter according to a comparative example;
FIG. 3A is a graph showing temporal change in a first three-phase AC voltage, and FIG. 3B is the phasor of the three-phase AC voltage of FIG. 3A;
FIG. 4A is the phasor of the first three-phase AC voltage when there are three rectifier circuit modules, FIG. 4B is the phasor of the first three-phase AC voltage when there are six rectifier circuit modules, and FIG. 4C is the phasor of the first three-phase AC voltage when there are nine rectifier circuit modules;
FIG. 5 is a functional block diagram showing a three phase AC-three phase AC converter according to a second embodiment;
FIG. 6 is a functional block diagram showing a controller in a three phase AC-three phase AC converter according to a third embodiment;
FIG. 7 is a functional block diagram showing a three phase AC-three phase AC converter according to a fourth embodiment;
FIG. 8 is a functional block diagram of a rectifier circuit including an energy buffer circuit in a three phase AC-three phase AC converter according to a fifth embodiment;
FIG. 9 is a functional block diagram of a rectifier circuit in a three phase AC-three phase AC converter according to a sixth embodiment;
FIG. 10 is a functional block diagram of a three phase AC-three phase AC conversion submodule in a three phase AC-three phase AC converter according to a seventh embodiment; and
FIG. 11 is a diagram showing the circuit configuration of a rectifier circuit module in a three phase AC-three phase AC converter according to multiple embodiments.

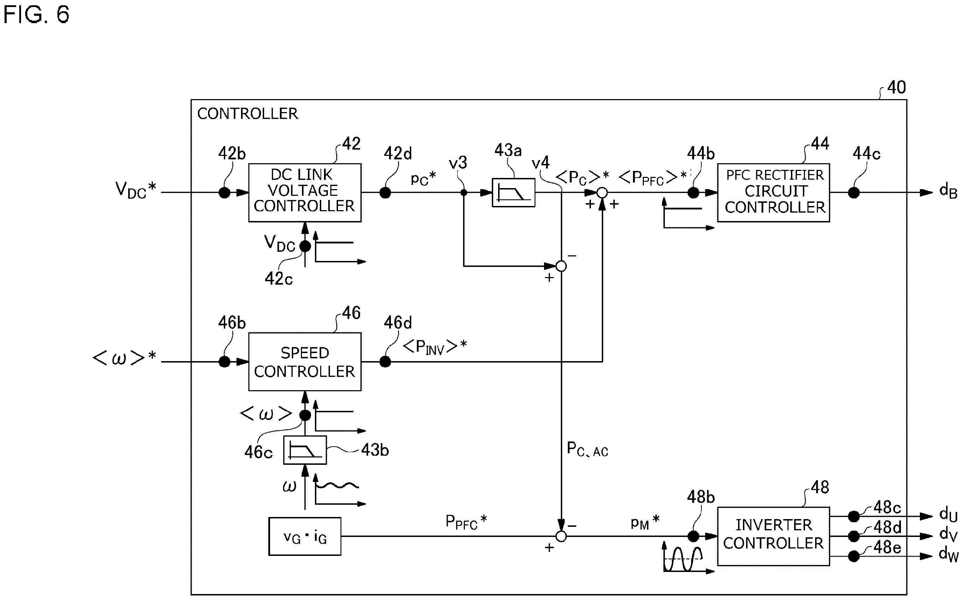

The control scheme disclosed in claim 1 is schematically reflected in fig. 6.

Hereinafter, the present invention will be described based on preferred embodiments with reference to the drawings. The embodiments do not intend to limit the scope of the invention but exemplify the invention. Not all of the features and the combinations thereof described in the embodiments are necessarily essential to the invention. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first", "second", etc., used in the specification and claims do not indicate an order or importance by any means unless specified otherwise and are used to distinguish a certain feature from the others. Those of the members that are not important in describing the embodiment are omitted from the drawings.

### [First embodiment]

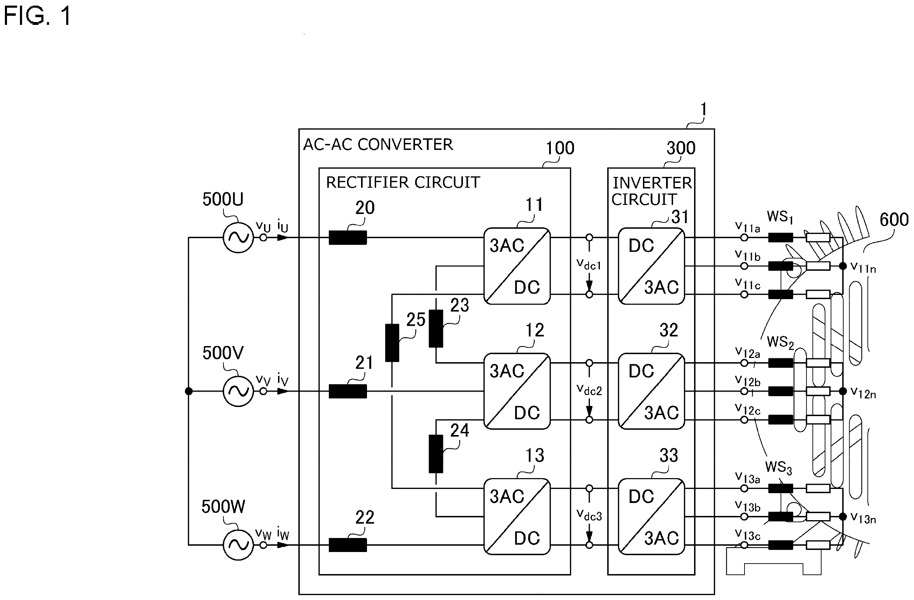

FIG. 1 is a functional block diagram showing a three phase AC-three phase AC converter 1 according to the first embodiment. The three phase AC-three phase AC converter 1 includes a rectifier circuit 100 and an inverter circuit 300. The rectifier circuit 100 generates a DC voltage from a three-phase AC input voltage (hereinafter, referred to as "first three-phase AC input voltage") from a three-phase AC power source such as a commercial power supply. This DC voltage is output to the inverter circuit 300. The inverter circuit 300 converts the DC voltage output from the rectifier circuit 100 into a three-phase AC input voltage (hereinafter, referred to as "second three-phase AC voltage"). A three-phase motor is driven by the second three phase AC output voltage.

The rectifier circuit 100 is modularized. That is, the rectifier circuit 100 includes a first rectifier circuit module 11, a second rectifier circuit module 12, a third rectifier circuit module 13, and inductors 20, 21, 22, 23, 24, and 25. As will be described later, each of the first, second and third rectifier circuit modules 11, 12 and 13 is, for example, a three phase bridge circuit composed of six switching elements and has three input terminals and two output terminals. The first, second, and third rectifier circuit modules 11, 12 and 13 are all connected to each other via inductors. That is, the first rectifier circuit module 11 is connected to the second rectifier circuit module 12 via an inductor 23 and is connected to the third rectifier circuit module 13 via an inductor 25. The second rectifier circuit module 12 is connected to the third rectifier circuit module 13 via an inductor 24 and is connected to the first rectifier circuit module 11 via the inductor 23. The third rectifier circuit module 13 is connected to the first rectifier circuit module 11 via the inductor 25 and is connected to the second rectifier circuit module 12 via the inductor 24. Hereinafter, a connection mode in which all the elements and circuits are interconnected with all other elements and circuits in this way is referred to as "mesh connection". That is, in this embodiment, the first, second, and third rectifier circuit modules 11, 12 and 13 are mesh-connected via the inductors.

One of the input terminals of the first rectifier circuit module 11 is connected to a U-phase output terminal of the three-phase AC power supply via the inductor 20. A U phase 500U of the three-phase power supply is input to the first rectifier circuit module 11 via the inductor 20. The input voltage to the first rectifier circuit module 11 is denoted by vᵤ, and the input current is denoted by iᵤ. One of the input terminals of the second rectifier circuit module 12 is connected to a V-phase output terminal of the three-phase AC power supply via the inductor 21. A V phase 500V of the three-phase power supply is input to the second rectifier circuit module 12 via the inductor 21. The input voltage to the second rectifier circuit module 12 is denoted by vᵥ, and the input current is denoted by iᵥ. One of the input terminals of the third rectifier circuit module 13 is connected to a W-phase output terminal of the three-phase AC power supply via the inductor 22. A W phase 500W of the three-phase power supply is input to the third rectifier circuit module 13 via the inductor 22. The input voltage to the third rectifier circuit module 13 is denoted by v_{w}, and the input current is denoted by i_{w}.

DC links vdc1, vdc2, and vdc3 are provided on the downstream side of the first, second, and third rectifier circuit modules 11, 12, and 13, respectively.

The first rectifier circuit module 11 eliminates a power pulsation caused by an input voltage vᵤ and an input current iᵤ and generates a first DC voltage. The second rectifier circuit module 12 eliminates a power pulsation caused by the input voltage vᵤ and the input current iᵤ and generates a second DC voltage. The third rectifier circuit module 13 eliminates a power pulsation caused by an input voltage v_{w} and an input current i_{w} and generates a third DC voltage. The first, second, and third DC voltages are output to the first, second, and third DC links outside the rectifier circuit 101, respectively. The voltages of the first, second, and third DC links (DC link voltages) are denoted by v_{dc1}, v_{dc2}, and v_{dc3}, respectively. The first, second, and third rectifier circuit modules 11, 12, and 13 are mesh-connected via the inductors, and the DC link voltages v_{dc1}, v_{dc2}, and v_{dc3} become equal as a result.

The first, second, and third external DC link voltages v_{dc1}, v_{dc2}, and v_{dc3} are input to the inverter circuit 300. The inverter circuit 300 is modularized and includes a first inverter circuit module 31, a second inverter circuit module 32, and a third inverter circuit module 33. The first, second, and third external DC link voltages v_{dc1}, v_{dc2}, and v_{dc3} are input to the first, second, and third inverter circuit modules 31, 32, and 33 of the inverter circuit 300, respectively. The first inverter circuit module 31 generates three-phase AC voltages v₁₁ₐ, v_{11b}, and v_{11c} from the first DC link voltage v_{dc1}. The second inverter circuit module 32 converts and generates three-phase AC voltages v₁₂ₐ, v_{12b}, and v_{12c} from the second DC link voltage v_{dc2}. The third inverter circuit module 33 generates three-phase AC voltages v₁₃ₐ, v_{13b}, and v_{13c} from the third DC link voltage v_{dc3}.

The three-phase AC voltages v₁₁ₐ, v_{11b}, and v_{11c} are supplied to a first winding WS₁ of a three-phase motor 600. The three-phase AC voltages v₁₂ₐ, v_{12b}, and v_{12c} are supplied to a second winding WS₂ of the three-phase motor 600. The three-phase AC voltages v₁₃ₐ, v_{13b}, and v_{13c} are supplied to a third winding WS₃ of the three-phase motor 600. In this way, the three-phase motor 600 is driven by three-phase output supplied to the first, second, and third windings WS₁, WS₂, and WS₃.

In the above-described embodiment, the number of rectifier circuit modules and the number of inverter circuit modules are both three. However, the numbers are not limited to this, and the number of the rectifier circuit modules and the number of the inverter circuit modules may be any multiple of three as long as the numbers are the same.

### [Comparative Example]

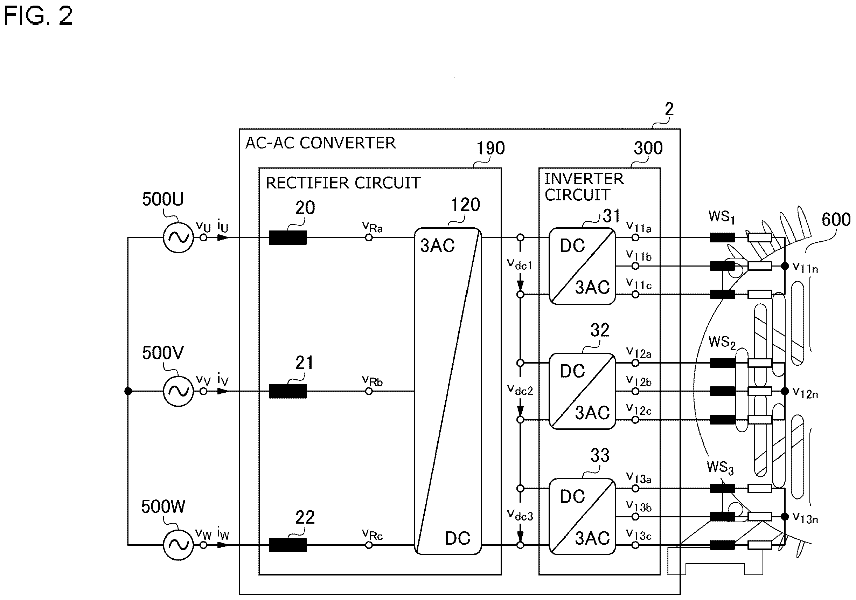

FIG. 2 is a functional block diagram of a three phase AC-three phase AC converter 2 according to a comparative example. The three phase AC-three phase AC converter 2 is devised in the process leading to the present invention. The three phase AC-three phase AC converter 2 according to the comparative example includes a rectifier 120 in place of the first, second, and third rectifier circuit modules 11, 12, and 13 of the three phase AC-three phase AC converter 1 according to the embodiment. That is, the rectifier 120 according to the comparative example is different from the embodiment in that the rectifier 120 is not modularized and is composed of a single DC bus. Since the other features of the three phase AC-three phase AC converter 2 are the same as those of the three phase AC-three phase AC converter 1, duplicate explanations will be omitted.

A U phase 500U, a V phase 500V, and a W phase 500W of a three-phase power supply are input to the rectifier 120 via the inductors 20, 21, and 22, respectively. The rectifier 120 eliminates a power pulsation caused by the input voltage vᵤ and the input current iᵤ of the U phase 500U, a power pulsation caused by the input voltage vᵥ and the input current iᵥ of the V phase 500V, and a power pulsation caused by the input voltage v_{w} and the input current i_{w} of the W phase 500W and generates a DC voltage.

As mentioned above, the rectifier 120 is not modularized and is configured to include one DC bus. In this case, since the input/output peak voltage becomes a high voltage, the circuit element used in the rectifier 120 is required to have high voltage resistance. On the other hand, since the rectifier circuit 100 is modularized by the three rectifier circuit modules 11, 12, and 13, the withstand voltage of each module can be reduced to 1/3 of the input/output peak voltage. Therefore, all modules including the inverter circuit can use low voltage resistant circuit elements. This makes it possible to achieve the miniaturization and densification of the entire motor drive system. In this way, according to the present embodiment, it is possible to achieve the miniaturization and densification of the motor drive system.

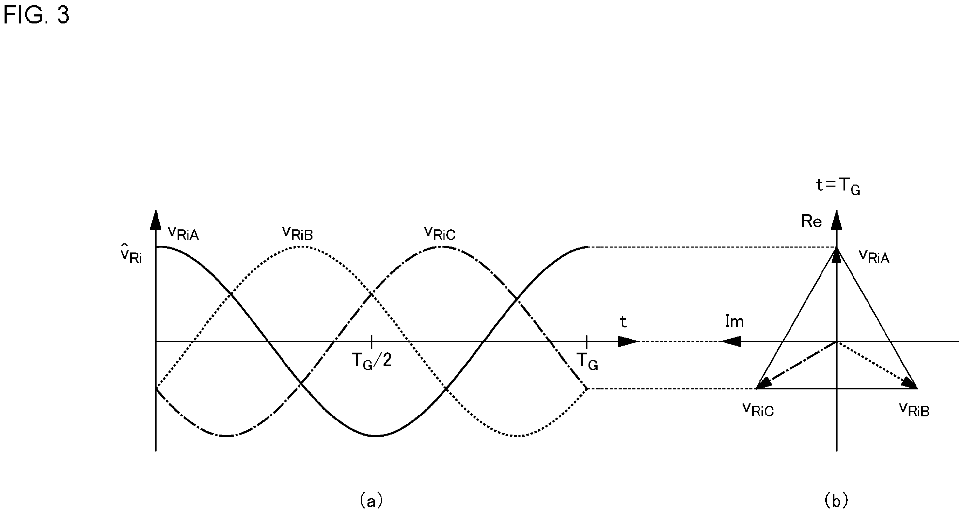

The number of the rectifier circuit modules is a multiple of three. Regarding this point, an explanation will be given in the following. FIG. 3A is a graph showing temporal change of a first three-phase AC voltage. As shown in the figure, first three-phase AC voltages vRiA, vRiB, and vRiC are shifted by 120 degrees from one another in phase. FIG. 3B is the phasor of the three-phase AC voltage of FIG. 3A. The phasor rotates at a power frequency fG with the passage of time. FIG. 3B shows a three-phase AC voltage at t = TG, where the power supply cycle is denoted by TG. Note that each side of the equilateral triangle in FIG. 3B represents a line voltage.

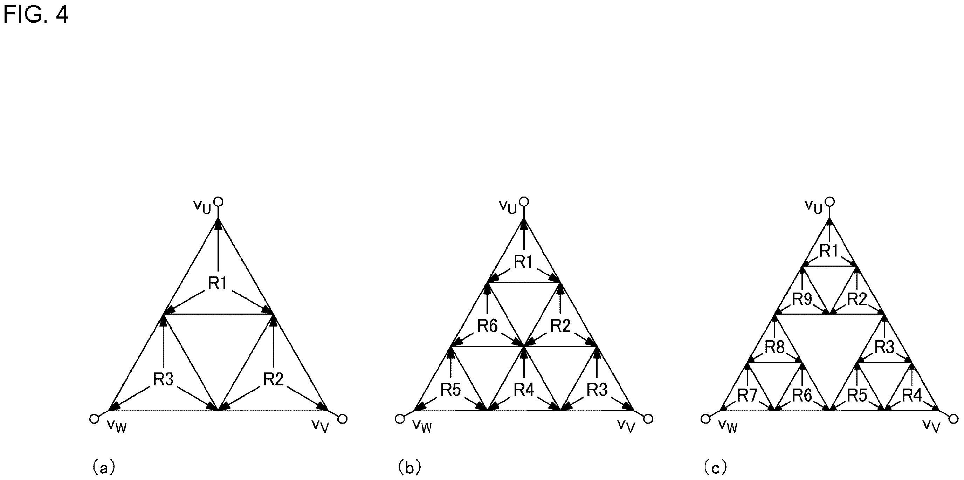

FIG. 4A shows the phasor of the first three-phase AC voltage when the first, second, and third rectifier circuit modules 11, 12, and 13 are mesh-connected via the inductors in the first embodiment. This graph is in the shape of a combination of three equilateral triangles R1, R2, and R3. The sides indicating line voltages are aligned in a straight line and in a symmetrical manner. FIG. 4B shows the phasor of the first three-phase AC voltage when six rectifier circuit modules are mesh-connected via the inductors. This graph is in the shape of a combination of six equilateral triangles R1, R2, R3, R4, R5, and R6. In this case as well, the sides indicating line voltages are aligned in a straight line and in a symmetrical manner. FIG. 4C shows the phasor of the first three-phase AC voltage when nine rectifier circuit modules are mesh-connected via inductors. This graph is in the shape of a combination of nine equilateral triangles R1, R2, R3, R4, R5, R6, R7, R8, and R9. In this case as well, the sides indicating line voltages are aligned in a straight line and in a symmetrical manner. By setting the number of the rectifier circuit modules to a multiple of three in this way, it is possible to align the sides of the phasor indicating line voltages in a straight line and in a symmetrical manner. As a result, each phase of the input voltage can be kept smooth without being disturbed.

In particular, when a three-phase motor is driven by a motor drive device using the rectifier circuit according to the embodiment, a drive voltage that is an integral multiple of the number of windings of the motor can be generated by setting the number of the rectifier circuit modules to a multiple of three. This allows smooth motor drive to be realized. Then, as the number of the rectifier circuit modules is increased to 3, 6, 9, ..., the withstand voltage of each module decreases to 1/3, 1/6, 1/9, .... Therefore, a low voltage resistance circuit element can be used.

In particular, the number of the rectifier circuit modules may be three. In this case, smooth motor drive can be realized with a minimum number of rectifier circuit modules. This allows the number of parts to be reduced.

### [Second Embodiment]

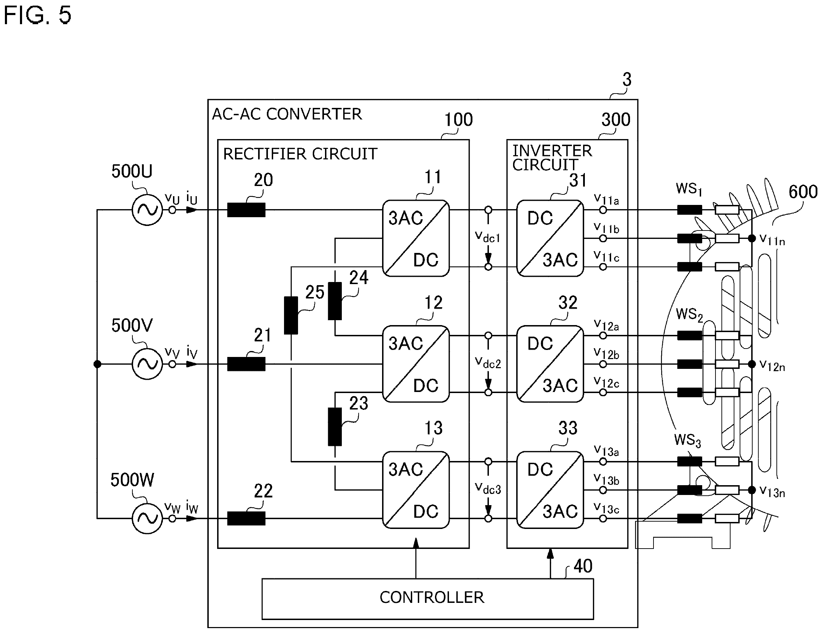

FIG. 5 is a functional block diagram showing a three phase AC-three phase AC converter 3 according to the second embodiment. The three phase AC-three phase AC converter 3 includes a controller 40 in addition to the features of the three phase AC-three phase AC converter 1 shown in FIG. 1. Since the other features of the three phase AC-three phase AC converter 3 are the same as those of the three phase AC-three phase AC converter 1, duplicate explanations will be omitted.

The controller 40 controls switching elements constituting the rectifier circuit modules 11, 12, and 13 and the inverter circuit modules 31, 32, and 33 such that the phase of a three-phase input current that is input from the AC power supply and the phase of the first three-phase AC voltage match while keeping the DC voltage constant. FIG. 5 shows a mode in which one controller 40 collectively controls the switching elements constituting the rectifier circuit modules 11, 12, and 13 and the inverter circuit modules 31, 32, and 33. However, the present invention is not limited to this configuration, and for example, six controllers may be provided, and these controllers may respectively and individually control the switching elements constituting the rectifier circuit modules 11, 12, and 13 and the inverter circuit modules 31, 32, and 33.

The control of the switching elements constituting the rectifier circuit modules 11, 12, and 13 and the inverter circuit modules 31, 32, and 33 performed by the controller 40 as described allows for the elimination of the pulsation of power produced by the DC voltages generated by the rectifier circuit modules 11, 12 and 13. Thereby, the rectifier circuit 100 can be used as a PFC rectifier circuit, and control with a power factor of 1 can be realized.

### [Third Embodiment]

In the third embodiment, the controller 40 of FIG. 5 controls the switching elements constituting the rectifier circuit modules and the inverter circuit modules such that the pulsation of three-phase AC power related to the first three-phase AC voltages and the pulsation of DC power related to the DC voltages are eliminated by using the load of an external motor. According to this embodiment, the power pulsation can be eliminated without using a large-capacity DC link capacitor.

Hereinafter, the configuration and operation of the controller 40 in the third embodiment will be described in detail with reference to FIG. 6. FIG. 6 is a detailed functional block diagram of the controller 40. The controller 40 includes a DC link voltage controller 42, a rectifier circuit controller 44, a speed controller 46, and an inverter controller 48. The controller 40 controls the switching elements constituting the rectifier circuit modules 11, 12, and 13 and the inverter circuit modules 31, 32, and 33 so as to adjust the generated DC voltages and the three-phase AC voltages.

The DC link voltage controller 42 includes a first input terminal 42b, a second input terminal 42c, and an output terminal 42d. The rectifier circuit controller 44 includes an input terminal 44b and an output terminal 44c. The speed controller 46 includes a first input terminal 46b, a second input terminal 46c, and an output terminal 46d. The inverter controller 48 includes an input terminal 48b, a first output terminal 48c, a second output terminal 48d, and a third output terminal 48e. The controller 40 includes a low pass filter 43a between the output terminal 42d of the DC link voltage controller 42 and the input terminal 44b of the rectifier circuit controller 44. The controller 40 includes a low pass filter 43b on the upstream side of the second input terminal 46c of the speed controller 46.

A target DC link voltage v_{DC}* is input to the first input terminal 42b of the DC link voltage controller 42. The current DC link voltage v_{DC} is input to the second input terminal 42c. The DC link voltage controller 42 obtains target capacitor power p_{C}* based on the difference Δv_{DC} (not shown) between v_{DC}* and v_{DC} and outputs the difference from the output terminal 42d.

The target capacitor power P_{C}* that is output from the output terminal 42d of the DC link voltage controller 42 is branched into two at a branch point v3, and one is input to the low pass filter 43a. The low pass filter 43a removes high frequency components from P_{C}* to generate the target average capacitor power <P_{C}>* and outputs the target average capacitor power <P_{C}>*. <P_{C}>* output from the low pass filter 43a is branched into two at a branch point v4, and one is added to the target average inverter output <P_{INV}>* output from the output terminal 46d of the speed controller 46. As a result, the target average rectified power <P_{PFC}>* is calculated as <P_{PFC}>* = <P_{C}>* + <P_{INV}>*. The calculated <P_{PFC}>* is input to the input terminal 44b of the rectifier circuit controller 44. The other <P_{C}>* branched at the branch point v4 is subtracted from the other P_{C}* branched at the branch point v3, and an input power pulsation p_{C,AC} is generated. In other words, the input power pulsation p_{C,AC} is obtained by extracting only the pulsation part from the target capacitor power P_{C}*. The input power pulsation p_{C,AC} is subtracted from the target rectified power p_{PFC}* so as to calculate target motor power p_{M}* (p_{M}* = p_{PFC}* - p_{C,AC}). The p_{M}* that has been calculated is input to the input terminal 48b of the inverter controller 48.

As described above, the target motor power p_{M}* that is input to the inverter controller 48 is obtained by subtracting the input power pulsation p_{C,AC} from the target rectified power p_{PFC}*. In other words, the pulsation ΔpDC of the DC link is input to the three-phase motor 600. The three-phase motor 600 compensates for this pulsation by the inertia possessed by a load connected to the three-phase motor 600. As a result, the pulsations of the DC link become zero, and p_{M} = p_{G} is established. In other words, the motor power p_{M} matches with the input power p_{G}.

The speed ω of the three-phase motor 600 pulsates at the frequency 2fG, which is twice the frequency fG of the input power pG, due to compensation of the input power pG by the three-phase motor 600. Accordingly, high frequency components of ω are removed using a low pass filter as shown in the following. The current motor speed ω is input to the low pass filter 43b. The low pass filter 43b removes the high frequency components from w to generate the current average speed <ω> of the motor and inputs the current average speed to the second input terminal 46c of the speed controller 46. A target average speed <ω>* of the three-phase motor 600 is input to the first input terminal 46b of the speed controller 46. The speed controller 46 obtains target average inverter output <P_{INV}>* based on the difference Δω (not shown) between <ω>* and <ω> and outputs the target average inverter output <P_{INV}>* from the output terminal 46d.

The rectifier circuit controller 44 controls the rectifier circuit 10 so as to keep the DC link voltage v_{DC} constant by feedforward. The target average inverter output <P_{INV}>* that has been output from the output terminal 46d of the speed controller 46 is added to the target average capacitor power <P_{C}>* that has been output from the low pass filter 43a. As a result, the target average rectified power <P_{PFC}>* is calculated as <P_{PFC}>* = <P_{C}>* + <P_{INV}>*. The calculated <P_{PFC}>* is input to the input terminal 44b of the rectifier circuit controller 44. The rectifier circuit controller 44 calculates a target input current i_{G}* (not shown) based on the <P_{PFC}>* that has been input, obtains an output duty ratio d_{B} from the inductor current difference, and outputs this from the output terminal 44c. The output duty ratio d_{B} that has been output is input to the rectifier circuit 100 via a pulse width modulator (not shown) such that desired control is realized.

According to the present embodiment, the power pulsation can be eliminated by using the load of the motor by the controller specifically configured as described above. This eliminates the need to use a large-capacity DC link capacitor and makes it possible to achieve the further miniaturization and densification of the entire motor drive system, reduce the cost, and extend the service life.

### [Fourth Embodiment]

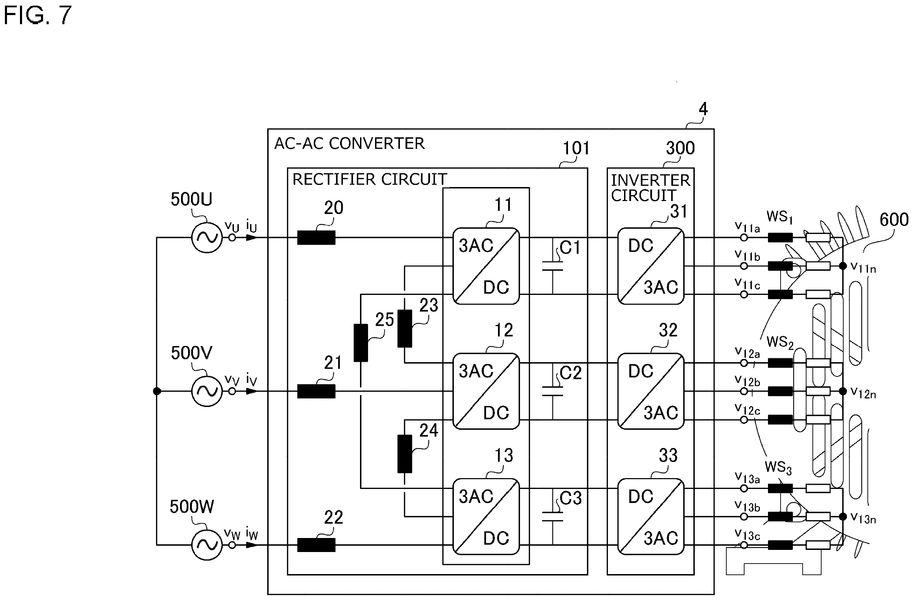

FIG. 7 is a functional block diagram showing a three phase AC-three phase AC converter 4 according to the fourth embodiment. The three phase AC-three phase AC converter 1 includes a rectifier circuit 101 and an inverter circuit 300. In the rectifier circuit 101, DC links provided with capacitors C1, C2, and C3 are provided on the downstream side of the rectifier circuit modules 11, 12, and 13, respectively, in the rectifier circuit 100 of FIG. 1. The capacitors C1, C2, and C3 eliminate the pulsation of power generated by an input three-phase AC voltage and the pulsation of DC power generated by the rectifier circuit modules 11, 12 and 13.

In a typical example, when the rectifier circuit 103 operates at several kW and several 100V, the capacitance of these capacitors is of the order of mF. According to the present embodiment, the power pulsation can be eliminated without providing a special controller.

### [Fifth Embodiment]

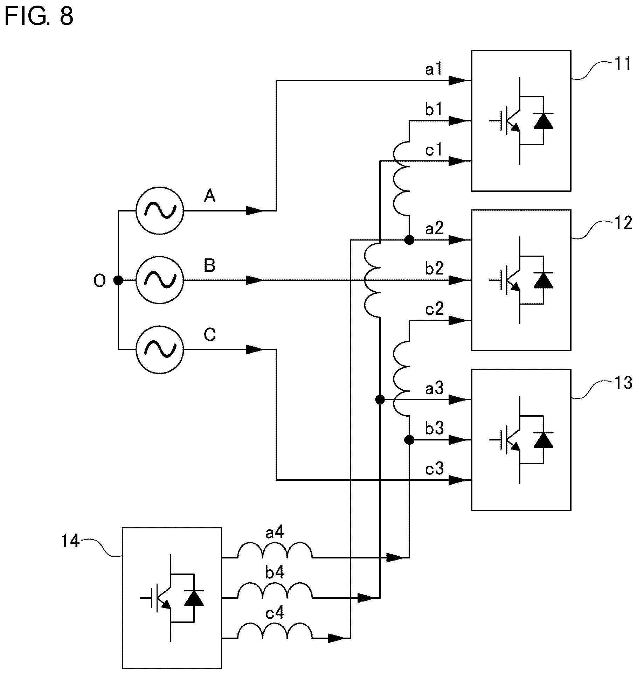

In the fifth embodiment, the three phase AC-three phase AC converter includes an energy buffer circuit. FIG. 8 is a functional block diagram of a rectifier circuit including an energy buffer circuit 14. The energy buffer circuit 14 is connected to one of the three input terminals of the rectifier circuit modules 11, 12, and 13. Just like the rectifier circuit modules, the energy buffer circuit 14 is a three-phase bridge circuit configured to include, for example, six switching elements. The energy buffer circuit 14 buffers the energy of three-phase AC input power supplied from the three-phase AC power supply to prevent excessive power from being input to the rectifier circuit modules 11, 12, and 13. According to the present embodiment, since the energy can be buffered before the input power is input to the rectifier circuit modules, smoother voltage control can be realized.

### [Sixth Embodiment]

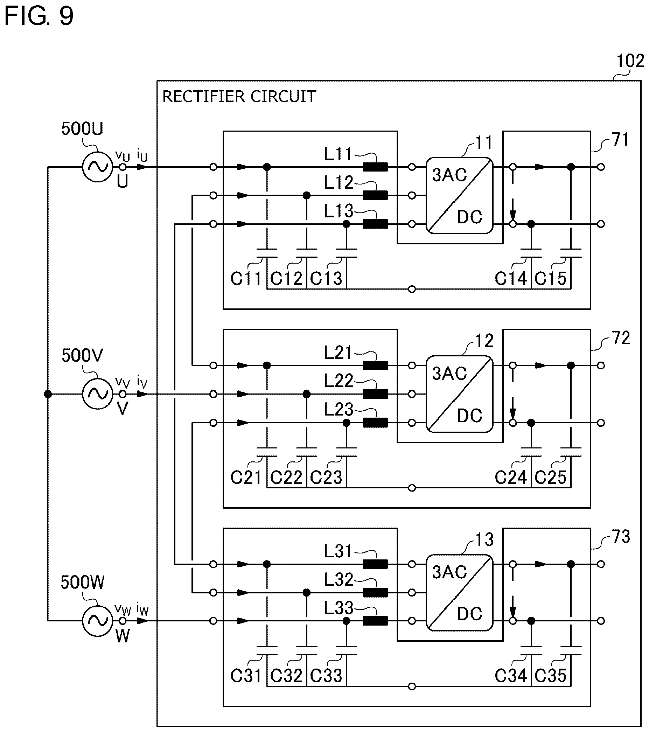

FIG. 9 is a functional block diagram of a rectifier circuit 102 in a three phase AC-three phase AC converter according to the sixth embodiment. In the rectifier circuit 102, first, second, and third low-pass filters 71, 72 and 73 are respectively provided on the upstream side of the first, second, and third rectifier circuit modules 11, 12, and 13 of the rectifier circuit 100 of FIG. 1. The first low-pass filter 71 is a n-type filter configured to include inductors L11, L12, and L13 and capacitors C11, C12, C13, C14, and C15. The second low-pass filter 72 is a n-type filter configured to include inductors L21, L22, and L23 and capacitors C21, C22, C23, C24, and C25. The third low-pass filter 73 is a n-type filter configured to include inductors L31, L32, and L33 and capacitors C31, C32, C33, C34, and C35. Since the other features of the rectifier circuit 102 are the same as those of the rectifier circuit 100, duplicate explanations will be omitted.

Each of the first, second, and third low-pass filters 71, 72, and 73 eliminate high-frequency components from the input AC voltage so as to generate a noise-removed input AC voltage. The first, second, and third rectifier circuit modules 11, 12, and 13 generate DC voltages from this noise-removed input AC voltage. According to the present embodiment, it is possible to generate DC voltages with less noise.

The low-pass filters 71, 72, and 73 shown in FIG. 9 are simple LC low-pass filters configured to include inductors and capacitors. In this case, the low-pass filters 71, 72, and 73 can be easily realized at low cost. Alternatively, the low-pass filters may be realized by any other suitable method such as operational amplifiers. Further, although the LC low-pass filters of FIG. 6 are n-type low-pass filters, the present invention is not limited to this, and any other suitable type of LC low-pass filters such as L-type and T-type low-pass filters may be used.

### [Seventh Embodiment]

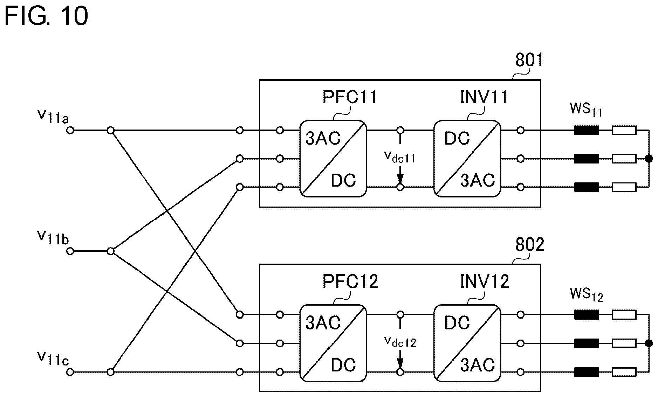

In a three phase AC-three phase AC converter according to the seventh embodiment, each of the inverter circuit modules is modularized along with two three phase AC-three phase AC conversion submodules. FIG. 10 is a functional block diagram of three phase AC-three phase AC conversion submodules 801 and 802 according to the seventh embodiment. The three phase AC-three phase AC conversion submodule 801 includes a rectifier circuit submodule PFC11 and an inverter submodule INV11. The three phase AC-three phase AC conversion submodule 802 includes a rectifier circuit submodule PFC12 and an inverter submodule INV12. Each of the three phase AC-three phase AC conversion submodules 801 and 802 is modularized along with the inverter circuit module 31 of FIG. 7.

The rectifier circuit submodules PFC11 and PFC12 are configured to include the same circuit as that of the rectifier circuit module 11. The inverter submodules INV11 and INV12 are configured to include the same circuit as that of the inverter circuit module 31. Each of the three phase AC-three phase AC conversion submodules 801 and 802 generates a three-phase AC voltage from a three-phase AC voltage generated by the inverter circuit module 31. The three-phase AC voltages generated by the three phase AC-three phase AC conversion submodules 801 and 802 are supplied to double windings WS₁₁ and WS₁₂ of the motor, respectively.

Each of the inverter circuit modules 32 and 33 (see, for example, FIG. 7) is also modularized along with two three phase AC-three phase AC conversion submodules having the same configuration as the three phase AC-three phase AC conversion submodules 801 and 802. The operation of the three phase AC-three phase AC conversion submodules is the same as that of the above-mentioned three phase AC-three phase AC conversion submodules 801 and 802.

According to the present embodiment, it is possible to realize a small and high-density motor drive device for a motor having double windings.

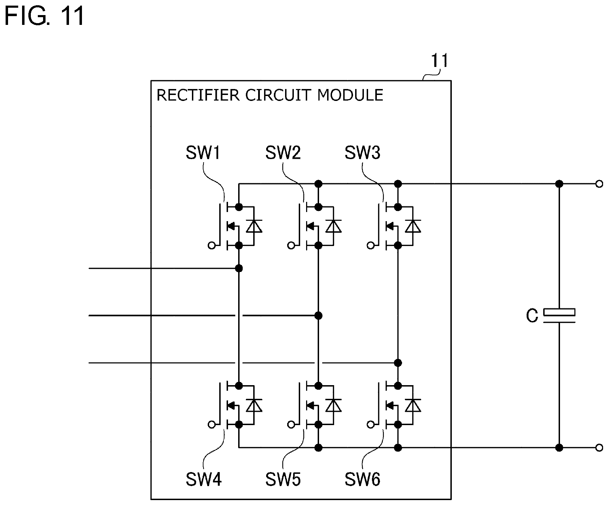

FIG. 11 shows an example of the circuit configuration of a rectifier circuit module 11 according to each of the above-described embodiments. The rectifier circuit module 11 is a three-phase bridge circuit configured to include switching elements SW1, SW2, SW3, SW4, SW5, and SW6. However, the present invention is not limited to this configuration, and the rectifier circuit module may be configured to include any other suitable circuit such as a bridgeless circuit.

In one embodiment, all rectifier circuit modules and inverter circuit modules are configured to include the same circuit. According to this embodiment, since the circuit parts can be commonized, the cost related to design and manufacturing can be reduced.

The above explanation is made based on the embodiments of the present invention. These embodiments are intended to be illustrative only, and it will be obvious to those skilled in the art that various modifications and changes can be developed within the scope of the claims of the present invention and that such modifications and changes are also within the scope of the claims of the present invention. Therefore, the descriptions and figures in the specification should be treated demonstratively instead of being treated in a limited manner.

An explanation will be given in the following regarding exemplary variations. In the figures and explanations of the exemplary variations, the same or equivalent constituting elements and members as those in the embodiment shall be denoted by the same reference numerals. Explanations that are the same as those in the embodiment are appropriately omitted, and an explanation will be given focusing on features that are different from those of the embodiments.

The rectifier circuit modules according to the embodiments are mesh-connected via inductors. The present invention is not limited to this configuration, and the rectifier circuit modules may be mesh-connected via diodes. In this case, a small and high-density rectifier circuit can be realized at a lower cost.

The exemplary variations achieve the same action and effect as those of the embodiments.

Optional combinations of the aforementioned embodiments and exemplary variations will also be within the scope of the present invention. New modes of practicing the invention created by combinations will provide the advantages of the embodiments and variations combined.

- 1, 2, 3, 4: three phase AC-three phase AC converter,
- 11: first rectifier circuit module,
- 12: second rectifier circuit module,
- 13: third rectifier circuit module,
- 14: energy buffer circuit,
- 20, 21, 22, 23, 24, 25: inductor,
- 31: first inverter circuit module,
- 32: second inverter circuit module,
- 33: third inverter circuit module,
- 40: controller,
- 100, 101, 102: rectifier circuit,
- 300: inverter circuit,
- 600: three-phase motor,
- 801, 802: three phase AC-three phase AC conversion submodule

## Claims

1. A three phase AC-three phase AC converter (1) comprising
n rectifier circuit modules (11, 12, 13), where n is a multiple of three, configured to convert a three-phase AC input voltage supplied from a three-phase AC power supply into a DC voltage; and
the same number of inverter circuit modules (31, 32, 33) as the rectifier circuit modules (11, 12, 13) configured to convert the DC voltage into a three phase AC output voltage,
wherein three input terminals of each one of the rectifier circuit modules (11, 12, 13) are connected to an output terminal of each phase of the three-phase AC power supply and respective input terminals of the rectifier circuit modules different from the one of the rectifier circuit modules (11, 12, 13), respectively, via inductors (23-25);
**characterized by**
a controller (40) including a DC link voltage controller (42), a rectifier circuit controller (44), a speed controller (46), and an inverter controller (48), wherein
the DC link voltage controller (42) is configured to obtain a target capacitor power (pc*) based on the difference between a target DC link voltage (V_{DC}*) and a current DC link voltage (V_{DC}), and to output the target capacitor power (p_{C}*) to a low pass filter (43a) to generate a target average capacitor power (<P_{C}>*),
the speed controller (46) is configured to obtain a target average inverter output (<P_{INV}>*) based on a difference between a target average speed (<ω>*) of a motor and a current average speed (<ω>) of the motor,
the rectifier circuit controller (44) is configured to calculate a target input current based on a target average rectified power (<P_{PFC}>*) calculated by adding the target average capacitor power (<P_{C}>*) and the target average inverter output (<P_{INV}>*), to obtain an output duty radio (d_{B}) and to output the output duty ratio (d_{B}) to a rectifier circuit (100) including the rectifier modules (11, 12, 13), and
the inverter controller (48) is configured to receive a target motor power (p_{M}*) calculated by subtracting an input power pulsation (p_{C,AC}) from a target rectified power (p_{PFC}*), wherein the input power pulsation (p_{C,AC}) is calculated by subtracting the target average capacitor power (<P_{C}*>) from the target capacitor power (pc*), and to control the inverter circuit modules (11, 12, 13).

2. The three phase AC-three phase AC converter (1) according to claim 1, wherein the number of the rectifier circuit modules (11, 12, 13) is three.

3. The three phase AC-three phase AC converter (1) according to claim 1 or 2, wherein each of the rectifier circuit modules (11, 12, 13) includes an energy buffer circuit (14) that is connected to one of the three input terminals of the rectifier circuit modules (11, 12, 13) and is configured for buffering the energy of three-phase AC input power that is supplied from the three-phase AC power supply and preventing excessive power from being input to the rectifier circuit modules (11, 12, 13).

4. The three phase AC-three phase AC converter (1) according to any one of claims 1 through 3, wherein
a low-pass filter is provided on the upstream side of the rectifier circuit modules (11, 12, 13).

5. The three phase AC-three phase AC converter (1) according to claim 4, wherein the low-pass filter is an LC low-pass filter.

6. The three phase AC-three phase AC converter (1) according to any one of claims 1 through 5, wherein
each of the inverter circuit modules (31, 32, 33) is modularized along with two three phase AC-three phase AC conversion submodules.

7. The three phase AC-three phase AC converter (1) according to any one of claims 1 through 6, wherein
the rectifier circuit modules (11, 12, 13) and the inverter circuit modules (31, 32, 33) are configured to include the same circuit.

## Patentansprüche

1. Dreiphasen-AC-Dreiphasen-AC-Wandler (1), umfassend:
n Gleichrichterschaltungsmodule (11, 12, 13), wobei n ein Vielfaches von drei ist, die eingerichtet sind, eine Dreiphasen-AC-Eingangsspannung, die von einer Dreiphasen-AC-Leistungsversorgung geliefert wird, in eine DC-Spannung zu wandeln; und
die gleiche Anzahl an Wechselrichterschaltungsmodule (31, 32, 33) wie die Gleichrichterschaltungsmodule (11, 12, 13), die eingerichtet sind, die DC-Spannung in eine Dreiphasen-AC-Ausgangsspannung zu wandeln, wobei
drei Eingangsanschlüsse von jedem einen der Gleichrichterschaltungsmodule (11, 12, 13) mit einem Eingangsanschluss von jeder Phase der Dreiphasen-AC-Leistungsversorgung und entsprechenden Eingangsanschlüssen der anderen Gleichrichterschaltungsmodule als dem einen der Gleichrichterschaltungsmodule (11, 12, 13) jeweils über Induktivitäten (23-25) verbunden sind;
**gekennzeichnet durch**
eine Steuerung (40), die eine DC-Verbindungsspannungssteuerung (42), eine Gleichrichterschaltungssteuerung (44), eine Geschwindigkeitssteuerung (46), und eine Wechselrichtersteuerung (48) enthält, wobei
die DC-Verbindungsspannungssteuerung (42) eingerichtet ist, eine Zielkondensatorspannung (p_{C}*) zu erhalten, auf Grundlage des Unterschieds zwischen einer Ziel-DC-Verbindungsspannung (V_{DC}*) und einer momentanen DC-Verbindungsspannung (V_{DC}), und die Zielkondensatorleistung (p_{C}*) an ein Tiefpassfilter (43a) auszugeben, um eine Ziel-Durchschnittskondensatorleistung (<P_{C}>*) zu erzeugen,
die Geschwindigkeitssteuerung (46) eingerichtet ist, eine Ziel-Durchschnittswechselrichterausgabe (<P_{INV}>*) zu erhalten, auf Grundlage eines Unterschieds zwischen einer Zieldurchschnittsgeschwindigkeit (<ω>*) eines Motors und einer momentanen Durchschnittsgeschwindigkeit (<ω>) des Motors,
die Gleichrichterschaltungssteuerung (44) eingerichtet ist, einen Zieleingangsstrom zu berechnen, auf Grundlage einer Ziel-Durchschnitts-gleichgerichteten Leistung (<P_{PFC}>*), die berechnet wird, indem die Ziel-Durchschnittskondensatorleistung (<P_{C}>*) und die Ziel-Durchschnittswechselrichterausgabe (<P_{INV}*) addiert werden, um ein Zieltastverhältnis (d_{B}) zu erhalten, und das Zieltastverhältnis (d_{B}) an eine Gleichrichterschaltung (100) auszugeben, die die Gleichrichtermodule (11, 12, 13) enthält, und
die Wechselrichtersteuerung (48) eingerichtet ist, eine Zielmotorleistung (p_{M}*) zu empfangen, die berechnet wird, indem eine Eingangsleistungspulsation (p_{C,AC}) von einer Ziel-gleichgerichteten Leistung (p_{PFC}*) subtrahiert wird, wobei die Eingangsleistungspulsation (p_{C,AC}) berechnet wird, indem die Ziel-Durchschnittskondensatorleistung (<P_{C}*>) von der Zielkondensatorleistung (p_{C}*) subtrahiert wird, und die Wechselrichterschaltungsmodule (11, 12, 13) zu steuern.

2. Dreiphasen-AC-Dreiphasen-AC-Wandler (1) nach Anspruch 1, wobei
die Anzahl an Gleichrichterschaltungsmodulen (11, 12, 13) drei ist.

3. Dreiphasen-AC-Dreiphasen-AC-Wandler (1) nach Anspruch 1 oder 2, wobei
jedes der Gleichrichterschaltungsmodule (11, 12, 13) eine Energiepufferschaltung (14) enthält, die mit einer der drei Eingangsanschlüsse der Gleichrichterschaltungsmodule (11, 12, 13) verbunden ist, und eingerichtet ist zum Puffern der Energie von Dreiphasen-AC-Eingangsleistung, die von der Dreiphasen-AC-Leistungsversorgung geliefert wird, und Verhindern, dass übermäßige Leistung zu den Gleichrichterschaltungsmodulen (11, 12, 13) eingegeben wird.

4. Dreiphasen-AC-Dreiphasen-AC-Wandler (1) nach einem der Ansprüche 1 bis 3, wobei
ein Tiefpassfilter auf der vorgeschalteten Seite der Gleichrichterschaltungsmodule (11, 12, 13) vorgesehen ist.

5. Dreiphasen-AC-Dreiphasen-AC-Wandler (1) nach Anspruch 4, wobei
das Tiefpassfilter ein LC-Tiefpassfilter ist.

6. Dreiphasen-AC-Dreiphasen-AC-Wandler (1) nach einem der Ansprüche 1 bis 5, wobei
jedes der Wechselrichterschaltungsmodule (31, 32 33) einher mit zwei Dreiphasen-AC-Dreiphasen-AC-Wandlungsuntermodulen modularisiert ist.

7. Dreiphasen-AC-Dreiphasen-AC-Wandler (1) nach einem der Ansprüche 1 bis 6, wobei
die Gleichrichterschaltungsmodule (11, 12, 13) und die Wechselrichterschaltungsmodule (31, 32, 33) eingerichtet sind, die gleiche Schaltung zu enthalten.

## Revendications

1. Convertisseur CA triphasé-CA triphasé (1) comprenant :
n modules de circuit redresseur (11, 12, 13), où n est un multiple de trois, configurés pour convertir une tension d'entrée alternative triphasée fournie par une alimentation électrique alternative triphasée en une tension continue ; et
le même nombre de modules de circuit onduleur (31, 32, 33) que les modules de circuit redresseur (11, 12, 13) configurés pour convertir la tension continue en une tension de sortie alternative triphasée,
dans lequel trois bornes d'entrée de chacun des modules de circuit redresseur (11, 12, 13) sont connectées à une borne de sortie de chaque phase de l'alimentation électrique alternative triphasée et à des bornes d'entrée respectives des modules de circuit redresseur différentes de celle des modules de circuit redresseur (11, 12, 13), respectivement, via des inductances (23-25) ;
**caractérisé par**
une unité de commande (40) comprenant une unité de commande de tension de liaison CC (42), une unité de commande de circuit redresseur (44), une unité de commande de vitesse (46) et une unité de commande d'onduleur (48), où
l'unité de commande de tension de liaison CC (42) est configurée pour obtenir une puissance de condensateur cible (p_{C}*) sur la base de la différence entre une tension de liaison CC cible (V_{DC}*) et une tension de liaison CC actuelle (V_{DC}), et pour délivrer en sortie la puissance de condensateur cible (p_{C}*) à un filtre passe-bas (43a) pour générer une puissance de condensateur moyenne cible (<P_{C}>*),
l'unité de commande de vitesse (46) est configurée pour obtenir une sortie d'onduleur moyenne cible (<P_{INV}>*) sur la base d'une différence entre une vitesse moyenne cible (<ω>*) d'un moteur et une vitesse moyenne actuelle (<ω>) du moteur,
l'unité de commande de circuit redresseur (44) est configurée pour calculer un courant d'entrée cible sur la base d'une puissance redressée moyenne cible (<P_{PFC}>*) calculée en ajoutant la puissance de condensateur moyenne cible (<P_{C}>*) et la sortie d'onduleur moyenne cible (<P_{INV}>*), pour obtenir un rapport cyclique de sortie (d_{B}) et pour délivrer en sortie le rapport cyclique de sortie (d_{B}) à un circuit redresseur (100) comprenant les modules de redresseur (11, 12, 13), et
l'unité de commande d'onduleur (48) est configurée pour recevoir une puissance de moteur cible (p_{M}*) calculée en soustrayant une pulsation de puissance d'entrée (p_{C,AC}) d'une puissance redressée cible (p_{PFC}*), où la pulsation de puissance d'entrée (p_{C,AC}) est calculée en soustrayant la puissance de condensateur moyenne cible (<P_{C}*>) de la puissance de condensateur cible (p_{C}*), et pour commander les modules de circuit onduleur (11, 12, 13).

2. Convertisseur CA triphasé-CA triphasé (1) selon la revendication 1, dans lequel le nombre de modules de circuit redresseur (11, 12, 13) est trois.

3. Convertisseur CA triphasé-CA triphasé (1) selon la revendication 1 ou 2, dans lequel chacun des modules de circuit redresseur (11, 12, 13) comprend un circuit tampon d'énergie (14) qui est connecté à l'une des trois bornes d'entrée des modules de circuit redresseur (11, 12, 13) et est configuré pour mettre en tampon l'énergie de la puissance d'entrée alternative triphasée qui est fournie par l'alimentation électrique alternative triphasée et empêcher l'entrée d'une puissance excessive dans les modules de circuit redresseur (11, 12, 13).

4. Convertisseur CA triphasé-CA triphasé (1) selon l'une quelconque des revendications 1 à 3, dans lequel
un filtre passe-bas est prévu sur le côté amont des modules de circuit redresseur (11, 12, 13).

5. Convertisseur CA triphasé-CA triphasé (1) selon la revendication 4, dans lequel le filtre passe-bas est un filtre passe-bas LC.

6. Convertisseur CA triphasé-CA triphasé (1) selon l'une quelconque des revendications 1 à 5, dans lequel
chacun des modules de circuit onduleur (31, 32, 33) est modularisé conjointement avec deux sous-modules de conversion CA triphasé-CA triphasé.

7. Convertisseur CA triphasé-CA triphasé (1) selon l'une quelconque des revendications 1 à 6, dans lequel
les modules de circuit redresseur (11, 12, 13) et les modules de circuit onduleur (31, 32, 33) sont configurés pour inclure le même circuit.
